# EUROPÄISCHE PATENTSCHRIFT

(11) **EP 3 126 723 B1**
(45) Veröffentlichungstag und Bekanntmachung des Hinweises auf die Patenterteilung: **20.03.2019**
(21) Anmeldenummer: 15703734.2
(22) Anmeldetag: 10.02.2015
(51) Int. Cl.: F16K 31/122, F16K 1/12, F16K 27/02

(54) **VENTIL**
VALVE
SOUPAPE

(30) Priorität: 31.03.2014 DE 102014004669
(43) Veröffentlichungstag der Anmeldung: 08.02.2017
(73) Patentinhaber: Festo AG & Co. KG, 73734 Esslingen (DE)
(72) Erfinder: GELBMANN, André, 73272 Neidlingen (DE); KANTHACK, Michael, 71299 Wimsheim (DE); KONRAD, Julian, 66793 Reisbach (DE)
(74) Vertreter: Patentanwälte Magenbauer & Kollegen Partnerschaft mbB
(86) Internationale Anmeldenummer: PCT/EP2015/000274
(87) Internationale Veröffentlichungsnummer: WO 2015/149898

(56) Entgegenhaltungen:
- EP-A1- 0 897 076
- EP-A1- 1 544 526
- DE-A1- 2 444 825
- DE-A1-102013 106 500
- DE-U1-202008 005 469

## Beschreibung

Die Erfindung betrifft ein Ventil, mit einem vom Prozessmedium durchströmbaren Ventilgehäuse, in dem ein eine Durchströmöffnung umgebender Ventilsitz angeordnet ist, dem ein an einer Spindel angeordnetes Ventilglied derart zugeordnet ist, dass das Ventilglied mittels eines Stellhubs der Spindel zwischen einer Absperrstellung, in der das Ventilglied prozessmediumdicht dichtend am Ventilsitz anliegt, und einer Offenstellung, in der das Ventilglied vom Ventilsitz abgehoben ist, bewegbar bewegt ist, und mit einem Ventilantrieb, der ein Antriebsgehäuse und ein im Antriebsgehäuse angeordnetes, den Stellhub der Spindel erzeugendes Antriebsglied aufweist, wobei das Antriebsgehäuse mit dem Ventilgehäuse über eine äußere und das Antriebsglied mit der Spindel über eine innere Schnittstelle miteinander koppelbar oder gekoppelt sind (vergleiche beispielsweise DE-A-10 2013 106 500). Es sind bereits Ventile bekannt, die eine sogenannte zweigeteilte Spindel aufweisen, wobei das erste Spindelteil dem Ventilantrieb und das zweite Spindelteil dem mit dem Ventilglied ausgestatten Ventilgehäuse zugeordnet ist. Die beiden Spindelteile werden über Schalen miteinander verbunden, die ihrerseits über ein Montagewerkzeug zu betätigen sind. Es ist hierfür erforderlich, zunächst das Antriebsgehäuse mit dem Ventilgehäuse zu verbinden, wodurch die beiden Spindelteile in Annäherung zueinander gebracht werden. Danach erfolgt die Verbindung der Spindelteile mittels der Schalen.

Aufgabe der Erfindung ist es, ein Ventil der eingangs erwähnten Art zu schaffen, bei dem sich der Ventilantrieb in einfacher Weise an das Ventilgehäuse ankoppeln lässt.

Diese Aufgabe wird durch ein Ventil mit den Merkmalen des unabhängigen Anspruches 1 gelöst. Weiterbildungen der Erfindung sind in den Unteransprüchen dargestellt.

Das erfindungsgemäße Ventil zeichnet sich dadurch aus, dass der äußeren Schnittstelle erste und der inneren Schnittstelle zweite Betätigungsmittel derart zugeordnet sind, dass die Betätigung der ersten Betätigungsmittel zur Kopplung oder Entkopplung von Antriebsgehäuse und Ventilgehäuse eine Betätigung der zweiten Betätigungsmittel zur Kopplung oder Entkopplung von Antriebsglied und Spindel bewirkt.

Bei der Betätigung der äußeren Schnittstelle wird die innere Schnittstelle also automatisch mit betätigt. Es ist also beispielsweise nicht notwendig, zunächst das Antriebsgehäuse mit dem Ventilgehäuse zu verbinden und danach die Spindel mit dem Antriebsglied zu koppeln wie es aus dem Stand der Technik bekannt ist sondern die Kopplung von Antriebsgehäuse und Ventilgehäuse bewirkt die Kopplung von Antriebsglied und Spindel.

Bei einer Weiterbildung der Erfindung weisen die ersten Betätigungsmittel an der äußeren Schnittstelle ein antriebsseitiges Schnittstellenteil und ein fluidseitiges Schnittstellenteil auf, die zur Kopplung von Antriebsgehäuse und Ventilgehäuse in einer Eingriffsstellung miteinander in Eingriff bringbar und von der Eingriffsstellung in eine Endstellung überführbar sind, in der Antriebsgehäuse und Ventilgehäuse aneinander fixiert sind. Das Entkoppeln kann dann durch Überführung der beiden Schnittstellenteile von der Endstellung in die Eingriffsstellung erfolgen.

In besonders bevorzugter Weise sind die beiden Schnittstellenteile derart ausgebildet und in der Eingriffsstellung zueinander positioniert, dass die Endstellung durch eine Relativbewegung der beiden Schnittstellenteile zueinander erreichbar ist. Ist das Ventilgehäuse beispielswiese in ein Rohrleitungssystem zum Transport von Prozessmedium eingebaut, so wird zweckmäßigerweise lediglich das antriebsseitige Schnittstellenteil bewegt, während das fluidseitige Schnittstellenteil ortsfest im Rohrleitungssystem eingebaut verbleibt.

Es ist möglich, dass das antriebsseitige Schnittstellenteil als ein vom Rest des Antriebsgehäuses separates Bauteil ausgebildet ist. Das antriebsseitige Schnittstellenteil kann beispielsweise als Hülse oder Rohrstück ausgebildet sein, das mit dem Rest des Antriebsgehäuses drehfest verbunden ist. Das antriebsseitige Schnittstellenteil kann beispielsweise an den Rest des Antriebsgehäuses angeschweißt sein. Alternativ ist es jedoch auch möglich, dass das antriebsseitige Schnittstellenteil einstückig an einer anderen Komponente des Antriebsgehäuses angeformt ist, beispielsweise an einen stirnseitigen Deckel des Antriebsgehäuses.

Es ist möglich, dass das fluidseitige Schnittstellenteil als ein vom Rest des Ventilgehäuses separates Bauteil ausgebildet ist. Das fluidseitige Schnittstellenteil ist vorzugsweise hohlzylindrisch ausgebildet sein. Zweckmäßigerweise ist das fluidseitige Schnittstellenteil lösbar am Rest des Ventilgehäuses befestigbar, so dass es bei Bedarf ausgetauscht werden kann. Für die lösbare Verbindung mit dem Rest des Ventilgehäuses eignet sich beispielsweise eine Gewindeverbindung.

In besonders bevorzugter Weise sind antriebsseitiges Schnittstellenteil und fluidseitiges Schnittstellenteil mittels einer Gewindeverbindung mit zueinander korrespondierendem Innen- und Außengewinde miteinander verschraubbar. Zweckmäßigerweise wird also das Antriebsgehäuse mit dem antriebsseitigen Schnittstellenteil auf das Ventilgehäuse mit dem fluidseitigen Schnittstellenteil geschraubt.

Zweckmäßigerweise befinden sich das Außengewinde am antriebsseitigen Schnittstellenteil und das Innengewinde am fluidseitigen Schnittstellenteil. Es ist jedoch auch eine umgekehrte Anordnung mit Außengewinde am fluidseitigen Schnittstellenteil und Innengewinde am antriebsseitigen Schnittstellenteil denkbar.

Alternativ zur Gewindeverbindung können die beiden Schnittstellenteile auch durch andere leicht lösbare Verbindungsarten miteinander verbunden werden. Hier eignet sich beispielsweise eine Steckverbindung.

Bei einer Weiterbildung der Erfindung weisen die zweiten Betätigungsmittel an der inneren Schnittstelle einen antriebsseitigen Schnittstellenabschnitt und einen fluidseitigen Schnittstellenabschnitt auf, die zur Kopplung von Antriebsglied und Spindel in einer Kopplungsstellung miteinander in Eingriff bringbar und von der Kopplungsstellung in eine Verriegelungsstellung überführbar sind, in der Antriebsglied und Spindel miteinander verriegelt sind. Befinden sich die beiden Schnittstellenabschnitte in der Verriegelungsstellung, so sind Antriebsglied und Spindel unlösbar miteinander verbunden. Zum Lösen des Antriebsglieds von der Spindel, beispielsweise im Falle, dass der Ventilantrieb ausgetauscht wird, müssen die beiden Schnittstellenabschnitte zunächst in die Kopplungsstellung überführt werden. In dieser Kopplungsstellung ist dann ein Lösen möglich.

In besonders bevorzugter Weise weisen die zweiten Betätigungsmittel wenigstens ein Verriegelungselement auf, das ein Lösen von Antriebsglied und Spindel in der Verriegelungsstellung verhindert.

Zweckmäßigerweise ist der antriebsseitige Schnittstellenabschnitt am Antriebsglied ausgebildet.

Der fluidseitige Schnittstellenabschnitt kann an der Spindel ausgebildet sein.

Prinzipiell wäre es jedoch auch möglich, dass antriebsseitige und/oder fluidseitige Schnittstellenabschnitt jeweils an separat vom Antriebsglied oder und/oder der Spindel ausgebildeten Bauteilen ausgebildet sind, die ihrerseits jeweils mit dem Antriebsglied oder der Spindel verbunden sind.

In besonders bevorzugter Weise befinden sich antriebsseitiger Schnittstellenabschnitt und fluidseitiger Schnittstellenabschnitt in Eingriffstellung von antriebsseitigem Schnittstellenteil und fluidseitigem Schnittstellenteil in der Kopplungsstellung. Zweckmäßigerweise befinden sich die beiden Schnittstellenabschnitte nach Überführung der beiden Schnittstellenteile in die Endstellung in der Verriegelungsstellung.

Bei einer Weiterbildung der Erfindung sind antriebsseitiger Schnittstellenabschnitt und fluidseitiger Schnittstellenabschnitt mittels einer Schnellkupplung lösbar miteinander kuppelbar. Bei der Schnellkupplung kann es sich beispielsweise um eine Schnell-Steckkupplung handeln.

Es ist möglich, dass die Schnellkupplung mehrere radial bezüglich einer durch Spindel und Antriebsglied verlaufenden Längsachse beweglich gelagerte Kupplungselemente und eine Eingriffsstruktur aufweist, in die die Kupplungselemente in der Kopplungsstellung der beiden Schnittstellenabschnitte eingreifen.

Zweckmäßigerweise sind die Kupplungselemente als Kupplungskugeln ausgebildet. Die Eingriffstruktur kann eine Ringnut aufweisen.

Zweckmäßigerweise ist die Ringnut am fluidseitigen Schnittstellenabschnitt ausgebildet, während die Kupplungskugeln am antriebsseitigen Schnittstellenabschnitt angeordnet sind.

Bei einer Weiterbildung der Erfindung ist das Verriegelungselement als Verriegelungshülse ausgebildet, das die Kupplungskugeln umhüllt, wobei das Verriegelungselement relativ zu den Kupplungskugeln beweglich gelagert ist und eine ringförmige Lagernut aufweist, die sich in der Kopplungsstellung auf gleicher Höhe wie die in die Ringnut eintauchenden Kupplungskugeln befindet, sowie einen Verriegelungsabschnitt besitzt, der sich in der Verriegelungsstellung auf Höhe der Kupplungskugeln befindet und eine Verlagerung der Kupplungskugeln nach radial außen außer Eingriff zur Ringnut verhindert. Das Verriegelungselement ist zweckmäßigerweise ortsfest mit dem Antriebsgehäuse verbunden, beispielsweise in einen rohrförmigen Stutzen des Antriebsgehäuses eingepresst. Die Kupplungskugeln können dabei an der Innenfläche der Verriegelungshülse ablaufen.

In besonders bevorzugter Weise ist die innere Schnittstelle bei geschlossener äußerer Schnittstelle in einer zur Umgebung geschlossenen Kammer angeordnet. Die äußere Schnittstelle ist zweckmäßigerweise im geschlossenen Zustand, also wenn sich die beiden Schnittstellenteile in der Endstellung befinden, abgedichtet, wodurch der Eintrag vom Schmutz in den Bereich der inneren Schnittstelle verhindert wird.

Bei einer Weiterbildung der Erfindung ist der Ventilantrieb als insbesondere fluidischer Linearantrieb ausgebildet. Prinzipiell wäre jedoch auch ein beispielsweise fluidischer Drehantrieb denkbar, bei dem dann die rotatorische Antriebsbewegung über Umsetzmittel in den Stellhub der Spindel übersetzbar ist.

Als fluidischer Linearantrieb kann ein fluidischer, insbesondere pneumatischer Kolbenantrieb vorgesehen sein. Der pneumatische Kolbenantrieb kann beispielsweise einen einfach- oder doppeltwirkenden Arbeitszylinder aufweisen.

Zweckmäßigerweise besitzt der pneumatische Kolbenantrieb ein Antriebsglied in Form eines druckluftbeaufschlagbaren Antriebskolbens und einer mit dem Antriebskolben verbundenen Kolbenstange, an der sich der antriebsseitige Schnittstellenabschnitt befindet.

Ein bevorzugtes Ausführungsbeispiel der Erfindung ist in der Zeichnung dargestellt und wird im Folgenden näher erläutert. In der Zeichnung zeigen:
- Figur 1: einen Längsschnitt durch ein bevorzugtes Ausführungsbeispiel des erfindungsgemäßen Ventils bei getrennter äußerer und innerer Schnittstelle,
- Figur 2: einen Längsschnitt durch das Ventil von Figur 1, wobei sich die beiden Schnittstellenteile der äußeren Schnittstelle in der Eingriffsstellung und die beiden Schnittstellenabschnitte der inneren Schnittstelle in der Kupplungsstellung befinden,
- Figur 3: einen Längsschnitt durch das Ventil gemäß Figur 1, bei dem äußere und innere Schnittstelle vollständig miteinander gekoppelt sind und sich die beiden Schnittstellenteile der äußeren Schnittstelle in der Endstellung und die beiden Schnittstellenabschnitte der inneren Schnittstelle in der Verriegelungsstellung befinden und
- Figur 4: einen Längsschnitt durch das Ventil aus Figur 3 mit dem Unterschied, dass die Spindel vom Ventilsitz abgehoben ist.

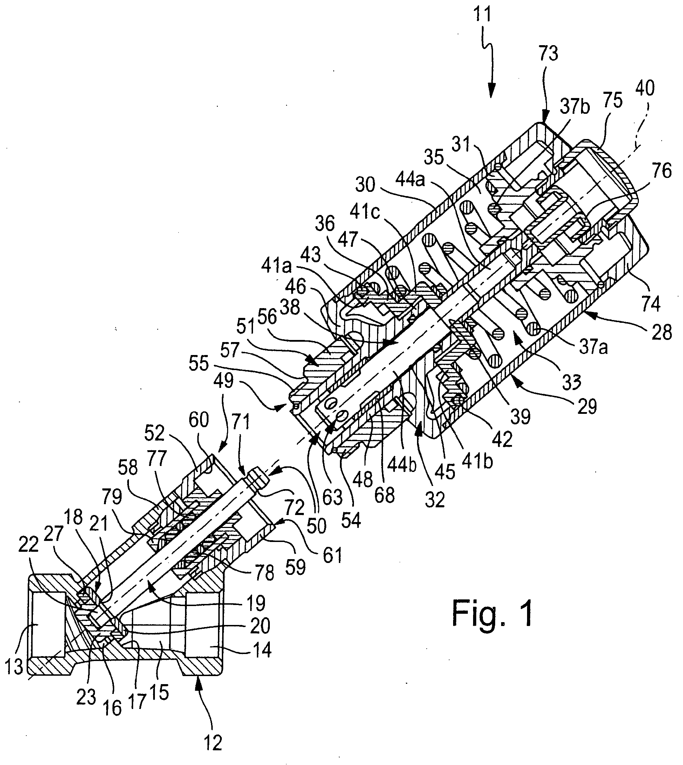

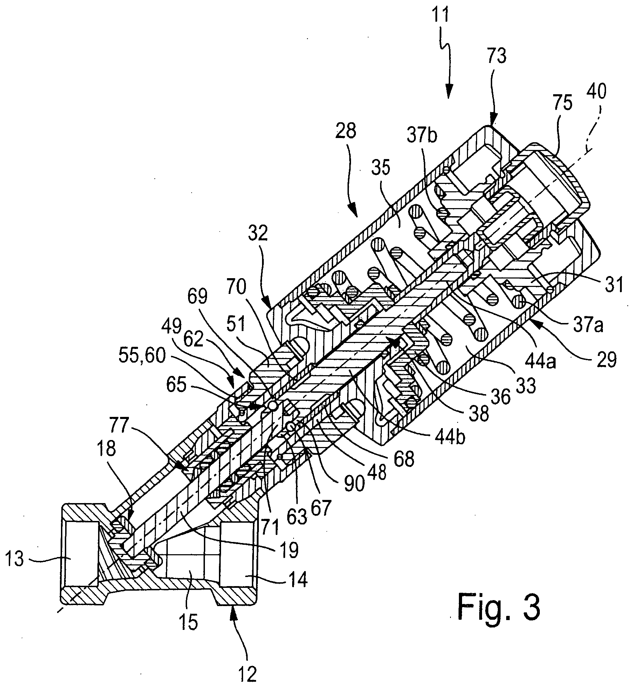

Die Figuren 1 bis 4 zeigen ein bevorzugtes Ausführungsbeispiel des erfindungsgemäßen Ventils 11. Das Ventil 11 ist dazu geeignet, als Prozessventil in der Prozessindustrie eingesetzt zu werden. Im Folgenden wird das erfindungsgemäße Ventil 11 beispielhaft anhand eines sogenannten Schrägsitz-Ventils erläutert. Die Erfindung lässt sich jedoch auch auf ein Geradsitz-Ventil oder Membran-Ventil anwenden.

Wie insbesondere in den Figuren 1 bis 4 dargestellt, besitzt das Ventil 11 ein Ventilgehäuse 12, in dem sich zwischen einem Eingang 13 und einem Ausgang 14 ein Durchströmungskanal 15 erstreckt.

Im Falle einer Verwendung in der Lebensmittelindustrie besteht das Ventilgehäuse 12 zweckmäßigerweise aus Edelstahl. Werden als Prozessmedien aggressive Substanzen, beispielsweise Säure, eingesetzt, besteht das Ventilgehäuse 12 zweckmäßigerweise aus Kunststoffmaterial, das gegenüber derartigen Substanzen eine größere chemische Beständigkeit besitzt.

Im Durchströmungskanal 15 befindet sich zwischen dem Eingang 13 und dem Ausgang 14 eine Durchströmöffnung 16, die von einem ringförmigen Ventilsitz 17 umgeben ist. Zweckmäßigerweise ist der Ventilsitz 17 kreisförmig ausgestaltet. Theoretisch wäre jedoch auch eine ovale Form des Ventilsitzes 17 denkbar. Dem Ventilsitz 17 ist ein Ventilglied 18 zugeordnet, das seinerseits an einer Spindel 19 angeordnet ist.

Das Ventilglied 18 ist rein beispielhaft mehrteilig gezeigt und besitzt in diesem Fall einen Teller 20, der mit einem Durchgangsloch 21 versehen ist, durch das hindurch ein Endabschnitt 22 der Spindel 19 hindurchsteckbar ist. Der Teller 20 ist beispielsweise mit der Spindel 19 verschweißt. Zum Ventilglied 18 zählt ferner noch ein Gegenstück 23, das mit einer sacklochartigen Aufnahmeöffnung 24 versehen ist, die mit einem Innengewinde versehen ist. Komplementär dazu befindet sich am Endabschnitt 22 der Spindel 19 ein Außengewinde, womit sich das Gegenstück 23 auf den Endabschnitt 22 der Spindel 19 schrauben lässt. Zwischen dem Gegenstück 23 und dem Teller 20 ist ein ringförmiger Dichtring 27 eingespannt, der zweckmäßigerweise aus Kunststoffmaterial, beispielweise PTFE, besteht.

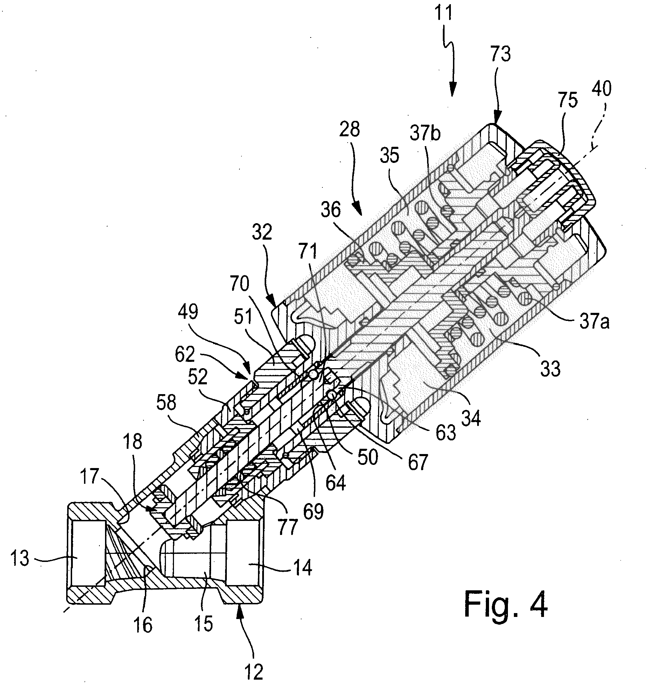

Das Ventilglied 18 ist mittels eines Stellhubs der Spindel 19 zwischen einer Absperrstellung, in der das Ventilglied 18 mit seinem Dichtring 27 fluiddicht am Ventilsitz 17 anliegt, und einer Offenstellung (Figur 4), in der das Ventilglied 18 vom Ventilsitz 17 abgehoben ist, bewegbar. Der Stellhub der Spindel 19 wird durch einen Ventilantrieb 28 erzeugt, der in nachfolgend noch näher erläuterter Weise an das Ventilgehäuse 12 ankoppelbar ist.

Der Ventilantrieb 28 ist in den Figuren 1 bis 4 beispielhaft anhand eines fluidischen Linearantriebs in Form eines pneumatischen Kolbenantriebs gezeigt. Der Ventilantrieb 28 besitzt ein Antriebsgehäuse 29. Das Antriebsgehäuse 29 besitzt einen hohlzylindrischen Gehäusekorpus 30, der endseitig mit jeweils einem Gehäusedeckel 31, 32 fluiddicht verschlossen ist. Der Gehäusekorpus 30 kann aus Aluminium bestehen, beispielsweise als Aluminium-Strangpressteil ausgeführt sein. Gegebenenfalls kann der Aluminium-Gehäusekorpus 30 noch mit einer Edelstahl-Hülle verkleidet sein. Alternativ wäre es jedoch auch denkbar, den Gehäusekorpus 30 als Edelstahl-Teil auszubilden. Die beiden Gehäusedeckel 31, 32 und der Gehäusekorpus 30 definieren einen Arbeitsraum 33, in dem ein Antriebskolben 36 beweglich geführt ist und den Arbeitsraum 33 in zwei Kolbenkammern 34, 35 unterteilt. Im Beispielsfall ist ein einfach wirkender Kolbenantrieb dargestellt, bei dem eine der beiden Kolbenkammern 34 mittels Druckluft beaufschlagbar ist, während in der anderen Kolbenkammer 35 wenigstens eine, im Beispielsfall zwei Rückstellfedern 37a, 37b angeordnet sind. Dabei ist die Anordnung so gewählt, dass die Rückstellfedern 37a, 37b den Antriebskolben 36 bei entlüfteter erster Kolbenkammer 34 nach unten drücken, wodurch die angekoppelte Spindel 19 und das damit verbundene Ventilglied 18 auf den Ventilsitz 17 gedrückt wird. Eine derartige Ausführung wird auch als normally closed bezeichnet. Wird die erste Kolbenkammer 34 mit Druckluft beaufschlagt, so wird der Antriebskolben 36 entgegen der Rückstellkraft der Rückstellfedern 37a, 37b nach oben gedrückt, wodurch sich letztendlich das Ventilglied 18 vom Ventilsitz 17 abhebt.

Der Antriebskolben 36 ist tellerförmig ausgebildet und ist fest mit einer Kolbenstange 38 verbunden, die über eine Durchgangsöffnung 39 durch den Antriebskolben 36 hindurchragt. Der Antriebskolben 36 ist im Beispielsfall in mehrere ringförmige, in Axialrichtung entlang einer durch Kolbenstange 38 und Spindel 19 verlaufenden Längsachse 40 hintereinander gestaffelte Zylinderabschnitte 41a-c unterteilt, die sich untereinander in ihrem jeweiligen Außendurchmesser unterscheiden. Der erste Zylinderabschnitt 41a besitzt den größten Außendurchmesser und liegt mit seiner Mantelfläche an der Innenwandung des Gehäusekorpus 30 an. In der Mantelfläche des ersten Zylinderabschnitt 41a ist eine ringförmige Dichtnut 42 ausgebildet, in der ein insbesondere aus Kunststoffmaterial bestehender Dichtring 43 aufgenommen ist. Der Dichtring 43 sorgt für eine dynamische Abdichtung zwischen der Mantelfläche des ersten Zylinderabschnitts 41a des Antriebskolbens 36 und der Innenfläche des Gehäusekorpus 30. An der der ersten Kolbenkammer 34 abgewandten Stirnfläche des ersten Zylinderabschnitts 41 ist die erste Rückstellfeder 37a abgestützt, die sich andererseits am ersten Gehäusedeckel 31 abstützt.

An den ersten Zylinderabschnitt 41a des Antriebskolbens 36 schließt sich ein zweiter Zylinderabschnitt 41b an, der einen kleineren Außendurchmesser besitzt. An der dortigen, der ersten Kolbenkammer 34 abgewandten Stirnfläche ist die zweite Rückstellfeder 37b abgestützt, die sich andererseits ebenfalls am ersten Gehäusedeckel 31 abstützt. Schließlich schließt sich in Axialrichtung an den zweiten Zylinderabschnitt 41b noch ein dritter Zylinderabschnitt 41c an, in dem die Durchgangsöffnung der Kolbenstange 38 ausgebildet ist.

Die Kolbenstange 38 ragt mit einem ersten Kolbenstangenabschnitt 44a in die zweite Kolbenkammer 35 hinein, während ein zweiter Kolbenstangenabschnitt 44b die erste Kolbenkammer 34 durchsetzt und über einen, im zweiten Gehäusedeckel 32 ausgebildeten zylindrischen Durchgangskanal 45 aus dem Antriebsgehäuse 29 herausgeführt ist. Der zweite Gehäusedeckel 32 besitzt einen Basisabschnitt 46, der fluiddicht mit dem Gehäusekorpus 30 verbunden, beispielsweise dort angeschweißt ist. An den Basisabschnitt 46 des zweiten Gehäusedeckels 32 schließt sich diesseits ein erster Fortsatz 47 an, der in die erste Kolbenkammer 34 hineinragt, wobei jenseits des Basisabschnitts 46 ein zweiter zylindrischer Fortsatz 48 ausgebildet ist, der vom Antriebsgehäuse 29 nach unten abragt.

Das Antriebsgehäuse 29 ist mit dem Ventilgehäuse 12 über eine äußere Schnittstelle 49 koppelbar oder gekoppelt. Das Antriebsglied ist mit der Spindel 19 über eine innere Schnittstelle 50 miteinander koppelbar oder gekoppelt. Der äußeren Schnittstelle 49 sind erste Betätigungsmittel und der inneren Schnittstelle 50 zweite Betätigungsmittel derart zugeordnet, dass die Betätigung der ersten Betätigungsmittel zur Kopplung oder Entkopplung von Antriebsgehäuse 29 und Ventilgehäuse 12 eine Betätigung der zweiten Betätigungsmittel zur Kopplung oder Entkopplung von Antriebsglied und Spindel 19 bewirkt. Die ersten Betätigungsmittel an der äußeren Schnittstelle 49 besitzen ein antriebsseitiges Schnittstellenteil 51, das bezüglich dem Rest des Antriebsgehäuses 29 als separates Bauteil ausgebildet ist. Das antriebsseitige Schnittstellenteil 51 ist hülsenförmig ausgebildet und ist auf den zweiten zylindrischen Fortsatz 48 des zweiten Gehäusedeckels 32 aufgesteckt und dort fest mit dem zweiten zylindrischen Fortsatz 48 verbunden, insbesondere dort angeschweißt. Das antriebsseitige Schnittstellenteil 51 ist mit einem fluidseitigen Schnittstellenteil 52 in einer Eingriffsstellung 53 in Eingriff bringbar. Hierzu besitzt das antriebsseitige Schnittstellenteil 51 einen hohlzylindrischen Befestigungsabschnitt 54, an dessen Mantelfläche ein Außengewinde 55 ausgebildet ist. An den Befestigungsabschnitt 54 schließt sich in Axialrichtung ein durchmessergrößerer Basisabschnitt 56 an. Der Übergang zwischen dem Befestigungsabschnitt 54 und dem Basisabschnitt 56 bildet eine, in einer Radialebene liegende ringförmige Anschlagfläche 57.

Das fluidseitige Schnittstellenteil 52 ist hohlzylindrisch ausgebildet und besitzt mehrere Funktionsabschnitte. Einer dieser Funktionsabschnitte ist ein zylindrischer Fixierabschnitt, an dessen Mantelfläche ein Außengewinde ausgebildet ist. Mit diesem Außengewinde korrespondiert ein an einem Fixierstutzen 58 des Ventilgehäuses 12 ausgebildetes Innengewinde, wodurch das Schnittstellenteil 52 in das Ventilgehäuse 12 eingeschraubt werden kann. Somit ist auch eine Demontage des Schnittstellenteils 52 vom Ventilgehäuse 12 möglich. Bei kleineren Nennweiten ist es möglich, dass Schnittstellenteil 52 und Ventilgehäuse als einteiliges Bauteil ausgeführt sind, das beispielsweise aus Gussmaterial besteht. Das fluidseitige Schnittstellenteil 52 besitzt ferner einen dem Befestigungsabschnitt 54 am antriebsseitigen Schnittstellenteil 51 zugeordneten Befestigungsbereich 59, an dessen Innenwandung ein Innengewinde 60 ausgebildet ist. Die Stirnfläche des Befestigungsbereichs 59 bildet eine Gegen-Anschlagfläche 61, die der Anschlagfläche 57 am antriebsseitigen Schnittstellenteil 51 zugeordnet ist.

Das antriebsseitige Schnittstellenteil 51 und mit diesem das gesamte Antriebsgehäuse 29 lässt sich also in das fluidseitige Schnittstellenteil 52 einschrauben, wodurch Antriebsgehäuse 29 und Ventilgehäuse 12 miteinander gekoppelt sind.

Beim Einschrauben des antriebsseitigen Schnittstellenteils 51 wird eine Endstellung 62 erreicht, die durch den Anschlag der beiden zueinander korrespondierenden Anschlagfläche und Gegen-Anschlagfläche 61 definiert ist.

Die zweiten Betätigungsmittel an der inneren Schnittstelle 50 weisen einen antriebsseitigen Schnittstellenabschnitt 63 auf, der sich an dem zweiten Kolbenstangenabschnitt 44b befindet.

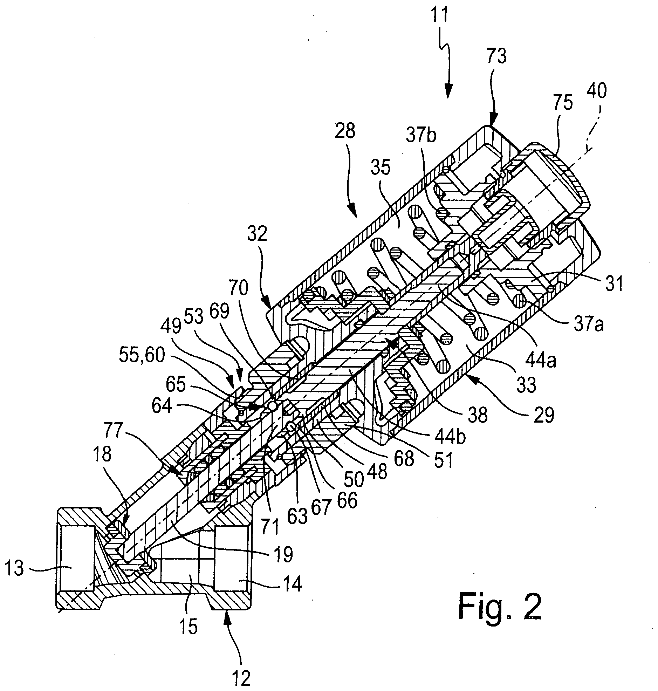

Wie insbesondere in den Figuren 2 bis 4 dargestellt, befindet sich an dem freien Ende des zweiten Kolbenstangenabschnitts 44b eine sacklochartig ausgebildete Spindelaufnahme 64 zur Aufnahme des dem mit dem Ventilglied 18 bestückten Spindelendes entgegengesetzten freien Spindelendes.

Die Spindelaufnahme 64 ist Teil einer Schnellkupplung 65 zur Verbindung von Antriebsglied und Spindel 19. Die Mantelfläche der Spindelaufnahme 64 ist mit mehreren in Umfangsrichtung hintereinander angeordneten Lageröffnungen 66 versehen, die sich jeweils in radialer Richtung durch die Wandung der Mantelfläche der Spindelaufnahme 64 hindurch erstrecken. Jeder Lageröffnung 66 ist ein Kupplungselement in Form einer Kupplungskugel 67 zugeordnet. Dabei ist der Öffnungsquerschnitt der Lageröffnungen 66 an der Innenfläche der Spindelaufnahme 64 kleiner als der Durchmesser der Kupplungskugeln 67, so dass verhindert wird, dass die Kupplungskugeln 67 nach radial innen durch die Lageröffnungen 66 hindurch- und aus der Spindelaufnahme 64 herausfallen können. Der Öffnungsquerschnitt an der Innenfläche der Spindelaufnahme 64 ist jedoch derart gestaltet, dass ein Kugelabschnitt einer jeweiligen Kupplungskugel 67 durch den Öffnungsquerschnitt an der Innenfläche der Spindelaufnahme hindurch ragen kann.

Dem antriebsseitigen Schnittstellenabschnitt 63 ist ferner ein Verriegelungselement in Form einer Verriegelungshülse 68 zugeordnet, die in radialer Richtung zwischen der Außenfläche des zweiten Kolbenstangenabschnitts 44b, also der Außenfläche des antriebsseitigen Schnittstellenabschnitts 63 und der Innenfläche des zweiten zylindrischen Fortsatzes 48 des zweiten Gehäusedeckels 32 angeordnet ist. Zweckmäßigerweise ist die Verriegelungshülse 68 aus verschleißfestem Material hergestellt, da an ihrer Innenfläche die Kupplungskugeln 67 beim Be- und Entkoppeln von Antriebsglied und Spindel 19 und auch beim Stellhub der Spindel 19 abrollen. Die Verriegelungshülse 68 ist mit der Innenfläche des zweiten zylindrischen Fortsatzes 48 verbunden, beispielsweise dort eingepresst.

Die Verriegelungshülse 68 besitzt zwei charakteristische Funktionsabschnitte. Es ist eine ringförmige Lagernut 69 vorgesehen, die in nachfolgend noch näher erläuterter Weise wirksam ist. An die ringförmige Lagernut 69 schließt sich in axialer Richtung ein Verriegelungsabschnitt 70 an, der gegenüber der Lagernut 69 einen geringeren Innendurchmesser aufweist.

Die zweiten Betätigungsmittel an der inneren Schnittstelle besitzen ferner noch einen fluidseitigen Schnittstellenabschnitt 71, der sich an der Spindel 19 befindet. Der fluidseitige Schnittstellenabschnitt 71 liegt im Bereich des zweiten Spindelendes, das dem mit dem Ventilglied 18 bestückten ersten Spindelende entgegengesetzt angeordnet ist.

Der fluidseitige Schnittstellenabschnitt 71 besitzt eine Eingriffstrukur, die ebenfalls wie auch die Funktionsabschnitte der Verriegelungshülse 68 Komponenten der Schnellkupplung 65 sind. Die Eingriffstruktur besitzt eine Ringnut 72.

Wie beispielsweise in Figur 1 dargestellt, besitzt das Antriebsgehäuse 29 an dem Gehäuseende, das dem mit den beiden Schnittstellen 49, 50 zugeordneten Gehäuseende entgegengesetzt angeordnet ist, eine Funktionsbaustein, der hier beispielhaft als Anzeigedeckel 73 dargestellt ist. Der Anzeigedeckel 73 besitzt eine Basispartie 74, die haubenartig ausgestaltet ist, auf den Gehäusekorpus 30 des Antriebsgehäuses 29 aufgesetzt und dort mit dem Gehäusekorpus 30 verbunden ist. Die Basispartie 74 überwölbt also den zweiten Gehäusedeckel 32. Der Anzeigedeckel 73 besitzt ferner neben der Basispartie 74 noch ein haubenartiges Sichtelement, beispielsweise aus Glasmaterial. Das Sichtelement 75 ermöglicht die Sicht auf einen Funktionsabschnitt des Antriebsglieds, nämlich auf den ersten Kolbenstangenabschnitt 44a und ein dort angeordnetes Anzeigeelement 76. Je nachdem ob die Spindel 19 vom Ventilsitz 17 abgehoben oder am Ventilsitz 17 prozessmediumdicht in Anlage gehalten ist, ist das Anzeigeelement 76 mehr oder weniger weit in Richtung des Sichtelements 75 verlagert. Aus der Stellung des Anzeigeelements 76 lässt sich damit erschließen, ob sich das Ventilglied 18 in der Schließ- oder in der Offenstellung befindet.

Zum Ventil 11 gehört ferner eine von der Spindel 19 durchgriffene Dichtungseinrichtung 77, die eine mittels Federmitteln vorgespannte, unter Abdichtung an die Spindel 19 anliegende Dichtungsmittel umfassende Dichtungsanordnung 78 aufweist. Die Dichtungseinrichtung 77 ist in einer vom Ventilgehäuse 12 gesonderten, als betriebsfertig vormontierte Baugruppe ausgebildeten Dichtungspatrone 79 aufgenommen.

Zur Kopplung wird das Antriebsgehäuse 29 mit dem antriebsseitigen Schnittstellenteil 51 voraus an das fluidseitige Schnittstellenteil 52 am Ventilgehäuse 12 herangeführt. Dabei kommt das am antriebsseitigen Schnittstellenteil 51 ausgebildete Außengewinde 55 in der Eingriffsstellung 53 in Kontakt mit dem am fluidseitigen Schnittstellenteil 52 ausgebildeten Innengewinde 60. Gleichzeitig fährt der fluidseitige Schnittstellenabschnitt 71 am freien Ende der Spindel 19 in die Spindelaufnahme 64 ein. Beim Einfahren können die Kupplungskugeln 67 zunächst nach radial außen verlagert werden, da sie auf Höhe der ringförmigen Lagernut 69 sind. Die Spindel 19 fährt soweit ein, bis die Stirnseite an die Unterseite der Spindelaufnahme 64 anstößt. In dieser Aufnahmestellung ist die Ringnut 72 an der Spindel 19 auf gleicher Höhe mit der ringförmigen Lagernut 69 an der Kolbenstange 38 positioniert.

Als nächstes wird nun das Antriebsgehäuse 29 auf das Ventilgehäuse 12 aufgeschraubt, in dem Außengewinde 55 am antriebsseitigen Schnittstellenteil 51 und Innengewinde 60 am fluidseitigen Schnittstellenteil 52 miteinander verschraubt werden. Die Einschraubtiefe des antriebsseitigen Schnittstellenteils 51 wird durch die beiden miteinander korrespondierenden Anschlagfläche 57 bzw. Gegen-Anschlagfläche 61 bestimmt. Beim gegenseitigen Anschlag der beiden Flächen befinden sich antriebsseitiges Schnittstellenteil 51 und fluidseitiges Schnittstellenteil 52 in der Endstellung 62.

Beim Einschrauben des antriebsseitigen Schnittstellenteils 51 werden Spindel 19 und Antriebsglied in Form der Kolbenstange 38 automatisch miteinander verriegelt. Dadurch, dass die Spindel mit ihrem Ventilglied 18 in Anlage zum Ventilsitz 17 gehalten ist, ist eine axiale Verlagerung der Einheit Spindel 19 und Kolbenstange 38 beim Einschrauben des antriebsseitigen Schnittstellenteils 51 verhindert, d.h. die Baueinheit Spindel 19 - Kolbenstange 38 bleibt ortsfest. Das antriebsseitige Schnittstellenteil 51 und mit diesem der zweite zylindrische Fortsatz 48 am zweiten Gehäusedeckel und die dort eingepresste Verriegelungshülse 68 bewegen sich jedoch relativ zu der Baueinheit Spindel 19 - Kolbenstange 38 so dass nunmehr beim weiteren Einschrauben der Verriegelungsabschnitt 70 der Verriegelungshülse 68 und nicht mehr die ringförmige Lagernut 69 radial außerhalb der Kupplungskugeln 67 angeordnet ist. Der Verriegelungsabschnitt 70 verhindert, dass die Kupplungskugeln 67 sich radial verlagern können und drückt die Kupplungskugeln 67 in die Ringnut 72 an der Spindel 19. Wird die Endstellung von antriebsseitigem Schnittstellenteil 51 und fluidseitigem Schnittstellenteil 52 erreicht, sind antriebsseitiger Schnittstellenabschnitt 63 und fluidseitiger Schnittstellenabschnitt 71, d.h. Spindel 19 und Kolbenstange 38 miteinander verriegelt und können nicht mehr voneinander gelöst werden.

Beim anschließenden Stellhub der Spindel, der durch Druckbeaufschlagung der ersten Kolbenkammer 34 bewirkt wird, rollen die Kupplungskugeln 65 ausschließlich am Verriegelungsabschnitt 70 der Verriegelungshülse 68 ab.

## Patentansprüche

1. Ventil, mit einem von Prozessmedium durchströmbaren Ventilgehäuse (12), in dem ein eine Durchströmöffnung (16) umgebender Ventilsitz (17) angeordnet ist, dem ein an einer Spindel (19) angeordnetes Ventilglied (18) derart zugeordnet ist, dass das Ventilglied (18) mittels eines Stellhubs der Spindel (19) zwischen einer Absperrstellung, in der das Ventilglied (18) prozessmediumdicht dichtend am Ventilsitz (17) anliegt, und einer Offenstellung, in der das Ventilglied (18) vom Ventilsitz (17) abgehoben ist, bewegbar ist, und mit einem Ventilantrieb (28), der ein Antriebsgehäuse (29) und ein im Antriebsgehäuse (29) angeordnetes, den Stellhub der Spindel (19) erzeugendes Antriebsglied aufweist, wobei das Antriebsgehäuse (29) mit dem Ventilgehäuse (12) über eine äußere und das Antriebsglied mit der Spindel (19) über eine innere Schnittstelle (49, 50) miteinander koppelbar oder gekoppelt sind, **dadurch gekennzeichnet, dass** der äußeren Schnittstelle (49) erste und der inneren Schnittstelle (50) zweite Betätigungsmittel derart zugeordnet sind, dass die Betätigung der ersten Betätigungsmittel zur Kopplung oder Entkopplung von Antriebsgehäuse (29) und Ventilgehäuse (12) eine Betätigung der zweiten Betätigungsmittel zur Kopplung oder Entkopplung von Antriebsglied und Spindel (19) bewirkt.

2. Ventil nach Anspruch 1, **dadurch gekennzeichnet, dass** die ersten Betätigungsmittel an der äußeren Schnittstelle (49) ein antriebsseitiges Schnittstellenteil (51) und ein fluidseitiges Schnittstellenteil (52) aufweisen, die zur Kopplung von Antriebsgehäuse (29) und Ventilgehäuse (12) in einer Eingriffsstellung (43) miteinander in Eingriff bringbar und von der Eingriffsstellung (53) in eine Endstellung (62) überführbar sind, in der Antriebsgehäuse (29) und Ventilgehäuse (12) aneinander fixiert sind.

3. Ventil nach Anspruch 2, **dadurch gekennzeichnet, dass** die beiden Schnittstellenteile (51, 52) derart ausgebildet und in der Eingriffsstellung (53) zueinander positioniert sind, dass die Endstellung (62) durch eine Relativbewegung der beiden Schnittstellenteile (51, 52) zueinander erreichbar ist.

4. Ventil nach Anspruch 2 oder 3, **dadurch gekennzeichnet, dass** das antriebsseitige Schnittstellenteil (51) als ein vom Rest des Antriebsgehäuses (29) separates Bauteil ausgebildet ist.

5. Ventil nach einem der Ansprüche 2 bis 4, **dadurch gekennzeichnet, dass** das fluidseitige Schnittstellenteil (52) als ein vom Rest des Ventilgehäuses (12) separates Bauteil ausgebildet ist.

6. Ventil nach einem der Ansprüche 2 bis 5, **dadurch gekennzeichnet, dass** antriebsseitiges Schnittstellenteil (51) und fluidseitiges Schnittstellenteil (52) mittels einer Gewindeverbindung mit zueinander korrespondierendem Innen- und Au-ßengewinde (55, 60) miteinander verschraubbar sind, wobei vorzugsweise das Außengewinde (55) am antriebsseitigen Schnittstellenteil (51) und das Innengewinde (60) am fluidseitigen Schnittstellenteil (52) ausgebildet sind.

7. Ventil nach einem der vorhergehenden Ansprüche, **dadurch gekennzeichnet, dass** die zweiten Betätigungsmittel an der inneren Schnittstelle (50) einen antriebsseitigen Schnittstellenabschnitt (63) und einen fluidseitiges Schnittstellenabschnitt (71) aufweisen, die zur Kopplung von Antriebsglied und Spindel (19) in einer Kopplungsstellung miteinander in Eingriff bringbar sind und von der Kopplungsstellung in eine Verriegelungsstellung (90) überführbar sind, in der Antriebsglied und Spindel (19) miteinander verriegelt sind, wobei vorzugsweise die zweiten Betätigungsmittel wenigstens ein Verriegelungselement aufweisen, das ein Lösen von Antriebsglied und Spindel (19) in der Verriegelungsstellung (90) verhindert.

8. Ventil nach Anspruch 7, **dadurch gekennzeichnet, dass** der antriebsseitige Schnittstellenabschnitt (63) am Antriebsglied ausgebildet ist.

9. Ventil nach Anspruch 7 oder 8, **dadurch gekennzeichnet, dass** der fluidseitige Schnittstellenabschnitt (71) an der Spindel (19) ausgebildet ist.

10. Ventil nach einem der Ansprüche 7 bis 9, **dadurch gekennzeichnet, dass** in der Eingriffsstellung (53) von antriebsseitigem Schnittstellenteil (51) und fluidseitigem Schnittstellenteil (52) sich antriebsseitiger Schnittstellenabschnitt (63) und fluidseitiger Schnittstellenabschnitt (71) in der Kopplungsstellung befinden und sich nach Überführung der beiden Schnittstellenteile (51, 52) in die Endstellung (62) in der Verriegelungsstellung (90) befinden.

11. Ventil nach einem der Ansprüche 7 bis 10, **dadurch gekennzeichnet, dass** antriebsseitiger Schnittstellenabschnitt (63) und fluidseitiger Schnittstellenabschnitt (71) mittels einer Schnellkupplung (65) lösbar miteinander kuppelbar sind, wobei vorzugsweise die Schnellkupplung mehrere radial bezüglich einer durch Spindel (19) und Antriebsglied verlaufenden Längsachse (40) beweglich gelagerte Kupplungselemente und eine Eingriffsstruktur aufweist, in die die Kupplungselemente in der Kopplungsstellung der beiden Schnittstellenabschnitte (63, 71) eingreifen.

12. Ventil nach Anspruch 11, **dadurch gekennzeichnet, dass** die Kupplungselemente als Kupplungskugeln (67) ausgebildet sind und die Eingriffsstruktur eine Ringnut (72) aufweist, wobei vorzugsweise die Ringnut (72) am fluidseitigen Schnittstellenabschnitt (71) ausgebildet ist und die Kupplungskugeln (67) am antriebsseitigen Schnittstellenabschnitt (63) angeordnet sind.

13. Ventil nach Anspruch 12, **dadurch gekennzeichnet, dass** das Verriegelungselement als Verriegelungshülse (68) ausgebildet ist, das die Kupplungskugeln (67) umhüllt, wobei das Verriegelungselement relativ zu den Kupplungskugeln (67) beweglich gelagert ist und eine ringförmige Lagernut (69) aufweist, die sich in der Kopplungsstellung auf gleicher Höhe wie die in die Ringnut (72) eintauchenden Kupplungskugeln (67) befindet, sowie einen Verriegelungsabschnitt (70) besitzt, der sich in der Verriegelungsstellung (90) auf Höhe der Kupplungskugeln (67) befindet und eine Verlagerung der Kupplungskugeln (67) nach radial außen außer Eingriff zur Ringnut (72) verhindert.

14. Ventil nach einem der vorgehgehenden Ansprüche, **dadurch gekennzeichnet, dass** die innere Schnittstelle (50) bei geschlossener äußerer Schnittstelle in einer zur Umgebung geschlossenen Kammer angeordnet ist.

15. Ventil nach einem der vorhergehenden Ansprüche, **dadurch gekennzeichnet, dass** der Ventilantrieb (28) als fluidischer Linearantrieb ausgebildet ist, wobei vorzugsweise als fluidischer Linearantrieb ein fluidischer, insbesondere pneumatischer Kolbenantrieb vorgesehen ist, wobei insbesondere der pneumatische Kolbenantrieb ein Antriebsglied in Form eines druckluftbeaufschlagbaren Antriebskolbens (36) und einer mit dem Antriebskolben (36) verbundenen Kolbenstange (38) aufweist, an der sich der antriebsseitige Schnittstellenabschnitt (63) ausgebildet ist.

## Claims

1. Valve with a valve housing (12), through which process medium can flow and in which a valve seat (17) surrounding a flow-through opening (16) is located, to which valve seat (17) a valve member (18) mounted on a spindle (19) is assigned in such a way that the valve member (18) is movable by means of an actuating stroke of the spindle (19) between a blocking position in which the valve member (18) bears against the valve seat (17) in a process medium-tight sealing manner and an open position in which the valve member (18) is lifted off the valve seat (17), and with a valve drive (28) featuring a drive housing (29) and a drive member located in the drive housing (29) and generating the actuating stroke of the spindle (19), wherein the drive housing (29) can be or is coupled to the valve housing (12) via an outer interface (49) and the drive member can be or is coupled to the spindle (19) via an inner interface (50), **characterised in that** first actuating means are assigned to the outer interface (49) and second actuating means are assigned to the inner interface (50) in such a way that the actuation of the first actuating means for coupling or decoupling the drive housing (29) and the valve housing (12) effects an actuation of the second actuating means for coupling or decoupling the drive member and the spindle (19).

2. Valve according to claim 1, **characterised in that** the first actuating means have at the outer interface (49) a drive-side interface part (51) and a fluid-side interface part (52), which can be brought into engagement in an engagement position (53) for coupling the drive housing (29) and the valve housing (12) and transferred from the engagement position (53) into an end position (62), in which the drive housing (29) and the valve housing (12) are fixed to each other.

3. Valve according to claim 2, **characterised in that** the two interface parts (51, 52) are designed such and positioned such in the engagement position (53) that the end position (62) can be reached by a relative movement of the two interface parts (51,52).

4. Valve according to claim 2 or 3, **characterised in that** the drive-side interface part (51) is designed as a component which is separate from the rest of the drive housing (29).

5. Valve according to any of claims 2 to 4, **characterised in that** the fluid-side interface part (52) is designed as a component which is separate from the rest of the valve housing (12).

6. Valve according to any of claims 2 to 5, **characterised in that** the drive-side interface part (51) and the fluid-side interface part (52) can be screwed together by means of a threaded connection with corresponding female and male thread (55, 60), the male thread (55) being preferably formed on the drive-side interface part (51) and the female thread (60) being preferably formed on the fluid-side interface part (52).

7. Valve according to any of the preceding claims, **characterised in that** the second actuating means have at the inner interface (50) a drive-side interface section (63) and a fluid-side interface section (71), which can be brought into engagement in a coupling position for coupling the drive member and the spindle (19) and transferred from the coupling position into a locking position (90), in which the drive member and the spindle (19) are locked to each other, the second actuating means preferably having at least one locking element which prevents a release of the drive member from the spindle (19) in the locking position (90).

8. Valve according to claim 7, **characterised in that** the drive-side interface section (63) is formed at the drive member.

9. Valve according to claim 7 or 8, **characterised in that** the fluid-side interface section (71) is formed at the spindle (19).

10. Valve according to any of claims 7 to 9, **characterised in that** in the engagement position (53) of the drive-side interface part (51) and the fluid-side interface part (52) the drive-side interface section (63) and the fluid-side interface section (71) are in the coupling position and, after the transfer of the two interface parts (51, 52) into the end position (62), in the locking position (90).

11. Valve according to any of claims 7 to 10, **characterised in that** the drive-side interface section (63) and the fluid-side interface section (71) can be releasably coupled by means of a quick-release coupling (65), wherein the quick-release coupling preferably comprises several coupling elements mounted for radial movement relative to a longitudinal axis (40) extending through the spindle (19) and the drive member and an engagement structure with which the coupling elements engage in the coupling position of the two interface sections (63, 71).

12. Valve according to claim 11, **characterised in that** the coupling elements are designed as coupling balls (67) and the engagement structure has an annular groove (72), wherein the annular groove (72) is preferably formed at the fluid-side interface section (71) and the coupling balls (67) are located at the drive-side interface section (63).

13. Valve according to claim 12, **characterised in that** the locking element is designed as a locking sleeve (68) which envelops the coupling balls (67), wherein the locking element is mounted movably relative to the coupling balls (67) and has an annular bearing groove (69), which is at the same level as the coupling balls (67) dipping into the annular groove (72) in the coupling position, and a locking section (70), which is at the level of the coupling balls (67) in the locking position (90) and prevents a radially outward displacement of the coupling balls (67) out of engagement with the annular groove (72).

14. Valve according to any of the preceding claims, **characterised in that** the inner interface (50) is located in a chamber closed off against the environment if the outer interface is closed.

15. Valve according to any of the preceding claims, **characterised in that** the valve drive (28) is designed as a fluidic linear drive, wherein a fluidic, in particular pneumatic, piston drive is preferably provided as a fluidic linear drive, wherein the pneumatic piston drive in particular comprises a drive member in the form of a drive piston (36) to which compressed air can be applied and a piston rod (38) connected to the drive piston (36), where the drive-side interface section (63) is formed.

## Revendications

1. Soupape, avec un boîtier de soupape (12) pouvant être traversé par un milieu de processus, dans lequel un siège de soupape (17) entourant une ouverture de passage (16) est agencé, auquel un organe de soupape (18) agencé au niveau d'une broche (19) est associé de sorte que l'organe de soupape (18) est déplaçable au moyen d'une course de réglage de la broche (19) entre une position d'obturation, dans laquelle l'organe de soupape (18) s'appuie de manière étanche sur le siège de soupape (17) avec étanchéité au milieu de processus, et une position ouverte, dans laquelle l'organe de soupape (18) est soulevé du siège de soupape (17), et avec un entraînement de soupape (28), qui présente un boîtier d'entraînement (29) et un organe d'entraînement agencé dans le boîtier d'entraînement (29) et générant la course de réglage de la broche (19), dans laquelle le boîtier d'entraînement (29) peut être couplé ou est couplé au boîtier de soupape (12) par le biais d'une interface extérieure et l'organe d'entraînement peut être couplé ou est couplé à la broche (19) par le biais d'une interface intérieure (49, 50), **caractérisée en ce que** des premiers moyens d'actionnement sont associés à l'interface extérieure (49) et des deuxièmes moyens d'actionnement sont associés à l'interface intérieure (50) de sorte que l'actionnement des premiers moyens d'actionnement pour le couplage ou découplage du boîtier d'entraînement (29) et du boîtier de soupape (12) entraîne un actionnement des deuxièmes moyens d'actionnement pour le couplage ou découplage de l'organe d'entraînement et de la broche (19).

2. Soupape selon la revendication 1, **caractérisée en ce que** les premiers moyens d'actionnement présentent au niveau de l'interface extérieure (49), une partie d'interface côté entraînement (51) et une partie d'interface côté fluide (52), qui peuvent être amenées en prise l'une avec l'autre dans une position de mise en prise (43) pour le couplage du boîtier d'entraînement (29) et du boîtier de soupape (12) et peuvent être amenées de la position de mise en prise (53) à une position finale (62), dans laquelle le boîtier d'entraînement (29) et le boîtier de soupape (12) sont fixés l'un à l'autre.

3. Soupape selon la revendication 2, **caractérisée en ce que** les deux parties d'interface (51, 52) sont réalisées et positionnées l'une par rapport à l'autre dans la position de mise en prise (53) de sorte que la position finale (62) peut être atteinte par un mouvement relatif des deux parties d'interface (51, 52) l'une par rapport à l'autre.

4. Soupape selon la revendication 2 ou 3, **caractérisée en ce que** la partie d'interface côté entraînement (51) est réalisée en tant que composant séparé du reste du boîtier d'entraînement (29).

5. Soupape selon l'une quelconque des revendications 2 à 4, **caractérisée en ce que** la partie d'interface côté fluide (52) est réalisée en tant que composant séparé du reste du boîtier de soupape (12).

6. Soupape selon l'une quelconque des revendications 2 à 5, **caractérisée en ce que** la partie d'interface côté entraînement (51) et la partie d'interface côté fluide (52) peuvent être vissées l'une à l'autre au moyen d'une liaison filetée avec un filetage intérieur et extérieur (55, 60) correspondant l'un à l'autre, dans laquelle de préférence le filetage extérieur (55) est réalisé au niveau de la partie d'interface côté entraînement (51) et le filetage intérieur (60) est réalisé au niveau de la partie d'interface côté fluide (52).

7. Soupape selon l'une quelconque des revendications précédentes, **caractérisée en ce que** les deuxièmes moyens d'actionnement présentent au niveau de l'interface intérieure (50), une section d'interface côté entraînement (63) et une section d'interface côté fluide (71), qui peuvent être amenées en prise l'une avec l'autre dans une position de couplage pour le couplage de l'organe d'entraînement et de la broche (19) et peuvent être amenées de la position de couplage à une position de verrouillage (90), dans laquelle l'organe d'entraînement et la broche (19) sont verrouillés l'un avec l'autre, dans laquelle de préférence les deuxièmes moyens d'actionnement présentent au moins un élément de verrouillage, qui empêche un desserrage de l'organe d'entraînement et de la broche (19) dans la position de verrouillage (90).

8. Soupape selon la revendication 7, **caractérisée en ce que** la section d'interface côté entraînement (63) est réalisée au niveau de l'organe d'entraînement.

9. Soupape selon la revendication 7 ou 8, **caractérisée en ce que** la section d'interface côté fluide (71) est réalisée au niveau de la broche (19).

10. Soupape selon l'une quelconque des revendications 7 à 9, **caractérisée en ce que** dans la position de mise en prise (53) de la partie d'interface côté entraînement (51) et de la partie d'interface côté fluide (52), la section d'interface côté entraînement (63) et la section d'interface côté fluide (71) se trouvent dans la position de couplage et se trouvent dans la position de verrouillage (90) après le transfert des deux parties d'interface (51, 52) dans la position finale (62).

11. Soupape selon l'une quelconque des revendications 7 à 10, **caractérisée en ce que** la section d'interface côté entraînement (63) et la section d'interface côté fluide (71) peuvent être couplées l'une à l'autre de manière amovible au moyen d'un raccord rapide (65), dans laquelle de préférence le raccord rapide présente plusieurs éléments d'accouplement logés mobiles radialement par rapport à un axe longitudinal (40) s'étendant à travers la broche (19) et l'organe d'entraînement et une structure de mise en prise, dans laquelle les éléments d'accouplement entrent en prise dans la position de couplage des deux sections d'interface (63, 71).

12. Soupape selon la revendication 11, **caractérisée en ce que** les éléments d'accouplement sont réalisés en tant que billes d'accouplement (67) et la structure de mise en prise présente une rainure annuaire (72), dans laquelle de préférence la rainure annuaire (72) est réalisée au niveau de la section d'interface côté fluide (71) et les billes d'accouplement (67) sont agencées au niveau de la section d'interface côté entraînement (63).

13. Soupape selon la revendication 12, **caractérisée en ce que** l'élément de verrouillage est réalisé en tant que douille de verrouillage (68), qui enveloppe les billes d'accouplement (67), dans laquelle l'élément de verrouillage est logé mobile par rapport aux billes d'accouplement (67) et présente une rainure de palier annulaire (69), qui se trouve dans la position de couplage à la même hauteur que les billes d'accouplement (67) plongeant dans la rainure annulaire (72), et dispose d'une section de verrouillage (70), qui se trouve dans la position de verrouillage (90) à hauteur des billes d'accouplement (67) et empêche un déplacement des billes d'accouplement (67) radialement vers l'extérieur hors prise de la rainure annulaire (72).

14. Soupape selon l'une quelconque des revendications précédentes, **caractérisée en ce que** l'interface intérieure (50) est agencée lorsque l'interface extérieure est fermée dans une chambre fermée par rapport à l'environnement.

15. Soupape selon l'une quelconque des revendications précédentes, **caractérisée en ce que** l'entraînement de soupape (28) est réalisé en tant qu'entraînement linéaire fluidique, dans laquelle un entraînement à piston fluidique, en particulier pneumatique, est prévu de préférence en tant qu'entraînement linéaire fluidique, dans laquelle en particulier l'entraînement à piston pneumatique présente un organe d'entraînement sous forme de piston d'entraînement sollicité par air comprimé (36) et une tige de piston (38) reliée au piston d'entraînement (36), au niveau de laquelle la section d'interface côté entraînement (63) est réalisée.
